# EUROPÄISCHE PATENTSCHRIFT

(11) **EP 2 964 508 B1**
(45) Veröffentlichungstag und Bekanntmachung des Hinweises auf die Patenterteilung: **11.01.2017**
(21) Anmeldenummer: 14704526.4
(22) Anmeldetag: 12.02.2014
(51) Int. Cl.: B62D 5/00

(54) **BEGRENZUNGSEINRICHTUNG FÜR DIE LENKWINKELEINGABE IN EINER ELEKTRISCHEN LENKUNG**
LIMITING DEVICE FOR THE STEERING ANGLE INPUT IN AN ELECTRICAL STEERING SYSTEM
DISPOSITIF DE LIMITATION DE L'EFFORT DE DIRECTION DANS UNE DIRECTION ASSISTÉE ÉLECTRIQUE

(30) Priorität: 08.03.2013 DE 102013004055
(43) Veröffentlichungstag der Anmeldung: 13.01.2016
(73) Patentinhaber: Audi AG, 85045 Ingolstadt (DE)
(72) Erfinder: PFEIFFER, Ulrich, 85123 Karlskron / Probfeld (DE)
(74) Vertreter: Reichert, Thomas Klaus
(86) Internationale Anmeldenummer: PCT/EP2014/000387
(87) Internationale Veröffentlichungsnummer: WO 2014/135247

(56) Entgegenhaltungen:
- EP-A1- 2 457 806
- EP-A2- 1 182 115
- DE-T2- 60 303 081
- FR-A1- 2 720 365
- FR-A1- 2 877 304
- FR-A1- 2 889 150
- US-A1- 2003 146 038
- US-A1- 2004 011 585

## Beschreibung

Die Erfindung betrifft eine Begrenzungseinrichtung für die Lenkwinkeleingabe in einer elektrischen Lenkung gemäß der im Oberbegriff des Patentanspruches 1 angegebenen Art.

Bei Lenkungen ohne mechanische Verbindung zum Lenkgetriebe (Steer-by-Wire) fehlt eine mechanische Rückmeldung zwischen Lenkwinkeleingabe durch den Fahrer über das Lenkrad und dem tatsächlich ausgeführten Lenkwinkel am Rad. Das Lenkgetriebe kann sich daher auch in die Endanschläge bewegen, ohne dass dies auf der Lenkwinkeleingabeseite am Lenkrad bemerkt wird. Es lassen sich damit unendlich große Lenkwinkelwünsche erzeugen, beispielsweise ein freies Durchdrehen des Lenkrades, ohne dass das Lenkgetriebe diese Lenkwinkelwünsche umsetzen könnte. Es kann sogar zu Beschädigungen an der Lenkung kommen. Ferner haben Lenkungen dieser Art auch keinerlei Lenkradverriegelungen, ein sog. Lenkradschloss, wie sie von den aktuellen Lenksystemen für Kraftfahrzeuge erwartet wird.

US 2003/0146038 A1 zeigt ein Lenksystem zum Steuern von Rädern eines Kraftfahrzeuges. Das Steuersystem umfasst ein Lenkrad, um Lenkwünsche an die gesteuerten Räder weiterzugeben, und eine Lenkwelle, die mechanisch an das Lenkrad gekoppelt ist. Ein Gehäuse ist an der Lenksäule angeordnet. Ein Klinkenelement ist axial verschiebbar in dem Gehäuse angeordnet, und eine Nut ist in der Lenkwelle ausgebildet, um das Klinkenelement aufzunehmen. Die Nut umfasst zwei Endwände, um die Drehbewegung des Lenkrades zu begrenzen. Es wird somit ein fest definierter Bewegungs- bzw. Drehbereich des Lenkrades definiert. Eine Variation der Anschlagposition ist jedoch nicht vorgesehen.

US 2004/0011585 A1 zeigt ein Steer-by-Wire-Lenksystem mit einer mechanischen Rückmeldeeinrichtung, die ein Lenkgefühl an den Fahrer übermittelt und die eine positive Stoppfunktion hat. Für die Stoppfunktion werden verschiedene Möglichkeiten starrer Lenkanschläge aufgezeigt, meist durch Blockieren von Zahnrädern bzw. Auf- und Abwickeln von Wickelfedern. Eine Variation der Anschlagposition ist nicht vorgesehen.

Da bei elektrischen Lenkungen ohne mechanische Verbindung von Lenkrad zum Lenkgetriebe am Rad auch die Lenkübersetzungen fließend verändert werden können und auch verändert werden, müssen die entsprechenden Lenkanschläge voll variabel nachgeführt oder eingestellt werden können.

FR 2 720 365 offenbart die Merkmale des Oberbegriffs des Anspruchs 1 und offenbart eine Begrenzungseinrichtung geeignet für die Lenkwinkeleingabe in einer elektrischen Lenkung, umfassend ein an einer Lenkwelle angeordnetes Getriebe, das einem Gewindestück einen Verstellweg ermöglicht, der der maximal zulässigen Anzahl von Umdrehungen des Lenkrades entspricht und Lenkanschläge zur Begrenzung des Verstellweges des Gewindestücks, wobei eine Antriebseinrichtung für die Lenkanschläge vorgesehen ist, durch die die Lenkanschläge gleichmäßig aufeinander zu oder auseinander zu bewegen sind.

FR 2 877 304 A1 offenbart eine Begrenzungseinrichtung für die Lenkwinkeleingabe in einer elektrischen Lenkung, bei der die Lenkanschläge mittels einer motorgetriebenen Antriebseinrichtung zu bewegen sind.

Der Erfindung liegt die Aufgabe zugrunde, eine Begrenzungseinrichtung für die Lenkwinkeleingabe in einer elektrischen Lenkung bereit zu stellen, wobei mit der Begrenzungseinrichtung die Lenkradeinschläge in beiden Drehrichtungen auf einfache Weise variable eingestellt werden können.

Dazu ist die erfindungsgemäße Begrenzungseinrichtung für die Lenkwinkeleingabe in einer elektrischen Lenkung gekennzeichnet durch ein an einer Lenkwelle angeordnetes Getriebe, das einem Gewindestück einen Verstellweg ermöglicht, der der maximal zulässigen Anzahl von Umdrehungen des Lenkrades entspricht, und Lenkanschlägen zur Begrenzung des Verstellweges des Gewindestücks, und eine motorgetriebene Antriebseinrichtung für die Lenkanschläge, durch die die Lenkanschläge gleichmäßig aufeinander zu bzw. auseinander zu bewegen sind.

Die Erfindung erfüllt die Kriterien konventioneller Lenkanschläge, wie sie aus Lenkungen mit mechanischem Durchgriff bekannt sind, für Lenkungen ohne einen mechanischen Durchgriff. Ferner sind die Lenkanschläge voll variabel und können sich so den Anforderungen einer Lenkung ohne mechanischen Durchgriff anpassen. Insbesondere bei voll variablen Lenkübersetzungen können die Lenkanschläge vollumfänglich nachgeführt werden.

Eine vorteilhafte Ausgestaltung der erfindungsgemäßen Begrenzungseinrichtung ist dadurch gekennzeichnet, dass das Getriebe eine an einer Lenkwelle angeordnete Gewindebuchse mit einem Außengewinde, das in ein Gewinde an dem Gewindestück eingreift, und eine motorgetriebene Getriebehülse mit einem Rechts- und einem Linksgewinde aufweist, die in an den Lenkanschlägen angeordnete entsprechende Rechts- bzw. Linksgewinde eingreifen. Es wird damit ein leichtgängiges und zuverlässiges Getriebe geschaffen, mit der die Lenkanschläge je nach Bedarf variabel eingestellt werden können.

Eine weitere vorteilhafte Ausgestaltung der erfindungsgemäßen Begrenzungseinrichtung ist gekennzeichnet durch gehäusefeste Führungen in Form von Führungszapfen zur drehfesten linearen Führung des Gewindestücks und der Lenkanschläge, wodurch eine einfache und sichere Linearführung des Gewindestückes und der Lenkanschläge gewährleistet wird.

Eine weitere vorteilhafte Ausgestaltung der erfindungsgemäßen Begrenzungseinrichtung ist dadurch gekennzeichnet, dass das Gewindestück von einem Stellmotor über ein Ritzel angetrieben ist, das in ein Außengewinde des Gewindestücks eingreift.

Eine weitere vorteilhafte Ausgestaltung der erfindungsgemäßen Begrenzungseinrichtung ist dadurch gekennzeichnet, dass die Getriebehülse über Gleitringe in Gehäusehälften der Begrenzungseinrichtung gelagert ist, und dass insbesondere die Gehäusehälften der Begrenzungseinrichtung an der Lenkwelle über Kugellager gelagert sind. Durch die Lager werden einerseits die Getriebehülse in den Gehäusehälften und andererseits die Gehäusehälfte an der Lenkwelle sicher und leichtgängig gelagert, so dass durch die Lagerung der betroffenen Bauteile keine zusätzliche Widerstandskraft in die Lenkung eingeführt wird.

Schließlich ist vorteilhaft, dass die Funktion Lenkradverriegelung ohne weitere Bauteile mit bereitgestellt werden kann.

Das Lenkrad kann nach der Entfernung des Zündschlüssels oder einer ähnlichen Zündvorrichtung verriegelt werden. Dafür werden in einfacher Weise die Lenkanschläge so bewegt, dass das Gewindestück zwischen den Lenkanschlägen festgeklemmt wird. Dies kann ohne weiteres durch die in der Lenkung ohnehin vorgesehene Steuerung erreicht werden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In den Zeichnungen bedeutet:
- Fig. 1: eine schematische Darstellung eines lenkradseitigen Teils einer Lenkungen ohne mechanischem Durchgriff;
- Fig. 2: eine perspektivische Draufsicht auf ein Ausführungsbeispiel einer Begrenzungseinrichtung für eine elektrische Lenkung, und
- Fig. 3: eine Schnittdarstellung der Begrenzungseinrichtung von Fig. 2.

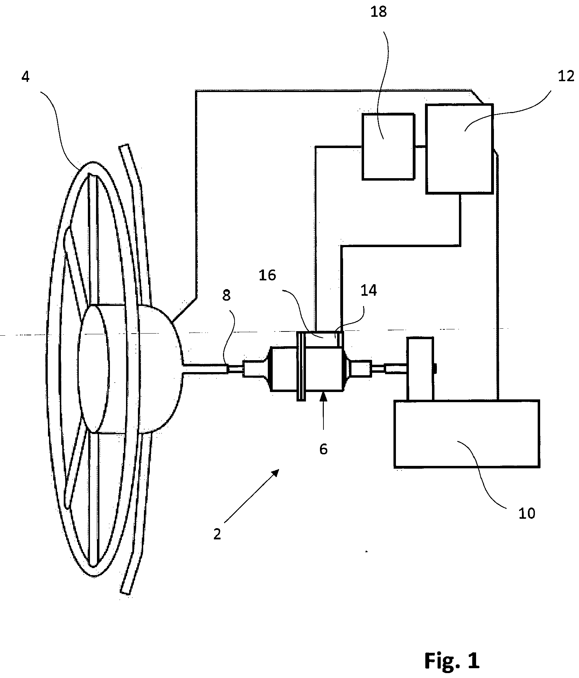

Fig. 1 zeigt eine schematische Darstellung eines lenkradseitigen Teils 2 einer Lenkung ohne mechanischen Durchgriff, wobei der radseitige Teil der Lenkung zur Vereinfachung nicht gezeigt ist, da es sich dabei um übliche Bauteile handelt. Der lenkradseitige Teil 2 der Lenkung umfasst ein Lenkrad 4 und eine Begrenzungseinrichtung 6 für die Lenkwinkeleingabe, die auf einer Lenkwelle 8 angeordnet sind, sowie eine Rückmeldevorrichtung 10, die dazu dient, der Bedienungsperson ein Lenkgefühl zu vermitteln, wie es bei mechanischen Lenkungen festzustellen ist.

Die Begrenzungsvorrichtung 6 und die Vorrichtung 10 werden von einem Steuergerät 12 gesteuert, das Eingaben von dem Lenkrad 4 und von einem Drehsensor 14 an der Begrenzungseinrichtung 6 erhält, wobei der Drehsensor 14 die Drehbewegung eines Motors 16 abtastet, der zur Einstellung der Begrenzung für die Lenkwinkeleingabe dient.

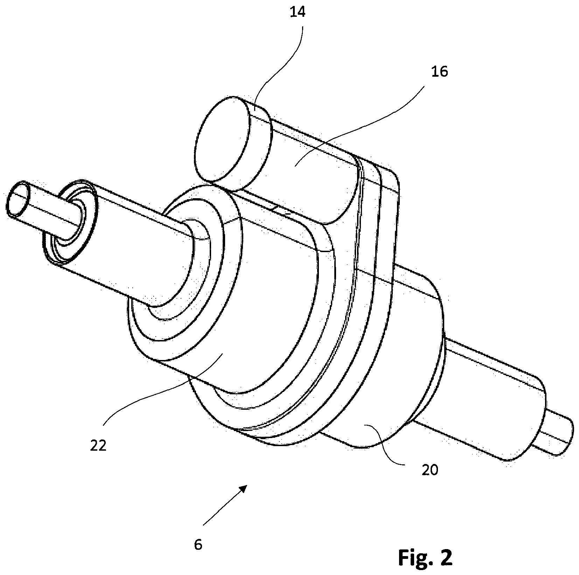

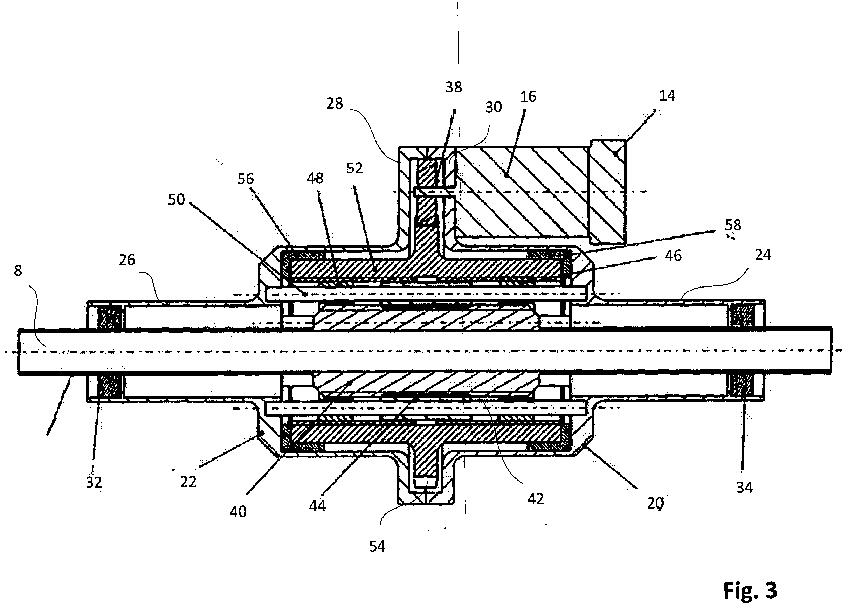

Wie in den Figuren 2 und 3 gezeigt ist, umfasst die Begrenzungsvorrichtung 6 ein Gehäuse, das aus zwei Gehäuseteilen 20, 22 besteht. Die Gehäuseteile 20, 22 haben rohrförmige Ansätze 24, 26, die über Kugellager 32, 34 auf der Lenkwelle 8 gelagert sind. Die Gehäuseteile 20, 22 schließen das Getriebe der Begrenzungseinrichtung 6 ein, und haben radiale Ansätze 28, 30, an denen der Motor 16 befestigt ist. Der Motor 16 treibt ein Ritzel 38 an, welches das Getriebe der Begrenzungseinrichtung 6 antreibt.

Im Folgenden wird der Aufbau des Getriebes der Begrenzungseinrichtung 6 beschrieben.

An der Lenkwelle 8 ist eine Gewindebuchse 40 befestigt die ein Außengewinde 42 mit einer Steigung hat, die einem Gewindestück 44 einen Verstellweg ermöglicht, der der maximal zulässigen Anzahl von Umdrehungen des Lenkrades 4 entspricht. Begrenzt wird der Weg des Gewindestücks 44 durch Lenkanschläge 46, 48. Die Lenkanschläge 46, 48 und das Gewindestück 44 werden durch die gehäusefesten Führungszapfen 50 geführt und gegen Verdrehung gesichert. Damit bewegen sich diese Bauteile linear in Ausrichtung der Lenkwelle 8.

Die Lenkanschläge 46, 48 werden über die angetriebene Gewindehülse 52 verstellt. In der Gewindehülse 52 befindet sich je ein Rechts- und ein Linksgewinde. Die Lenkanschläge 46, 48 besitzen ebenfalls das entsprechende Rechts- bzw. Linksgewinde. Damit bewegen sich die Lenkanschläge 46, 48 gleichmäßig aufeinander zu bzw. auseinander, indem die Gewindehülse 52 gedreht wird.

Die Gewindehülse 52 besitzt eine Außenverzahnung 54 in die das Ritzel 38 des Antriebsmotors 16 eingreift, sodass die Gewindehülse 52 durch den Antriebsmotor 16 gedreht werden kann. Die Gewindehülse 52 ist in axialer und radialer Richtung in zwei Gleitringen 56, 58 gelagert, welche in die Gehäuseteile 20, 22 unter Presssitz eingefügt sind. Die Lenkwelle 8 ist in den Gehäusehälften 28, 30 durch die Kugellager 32, 34 gelagert.

Der Kraftfluss bei Erreichen eines der Lenkanschläge 46, 48 geht von der Lenkwelle 8 über die Gewindebuchse 40, das Gewindestück 44 an die Lenkanschläge 46, 48. Von dort geht der Kraftfluss dann an die Gewindehülse 52, die sich über die Gleitlager 32, 34 an der jeweiligen Gehäusehälften 20, 22 abstützt. Eine Weiterbewegung der Lenkwelle 8 und damit des Lenkrades 4 wird so durch Anschlag an den Lenkanschlägen 46, 48 verhindert.

Da sich alle Kräfte über die Gewinde und das Gehäuse der Begrenzungseinrichtung 6 abstützen, dient der Antriebsmotor 16 nur zur lastfreien Verstellung der Lenkanschläge 46, 48 und kann somit klein und energiesparend ausgelegt werden.

Um die Lage der Lenkanschläge sicher zu detektieren, werden die Umdrehungen des Antriebsmotors 16 durch den Drehsensor 14 gezählt. Diese Umdrehungen haben über die Übersetzung der Gewindehülse 52 und dem Ritzel 38 die bekannten Gewindesteigungen der Gewinde in der Gewindehülse 52 und den Lenkanschläge 46, 48 einen konstanten Zusammenhang zur Position der Lenkanschläge 46, 48. Dieser Zusammenhang wird im Steuergerät 12 berechnet, dem zu diesem Zweck die Werte übergeben werden.

Um die Funktion Lenkradschloss bzw. Lenkradsperre darzustellen, wird das Lenkrad 4 zuerst durch den Force-Feedback-Antrieb in Neutralstellung gebracht. Das Erreichen dieser Lage wird dem Steuergerät 12 mitgeteilt, und das Steuergerät 12 steuert über den Leistungsbaustein 18 den Antriebsmotor 16 an. Der Antriebsmotor 16 treibt die Gewindehülse 52 an und bewegt damit die Lenkanschläge 46, 48 zusammen, so dass diese das Gewindestück 44 in der Mittelposition festklemmen. Somit sind Lenkbewegungen in alle Richtungen sicher blockiert.

Im Steuergerät 12 kann ferner sichergestellt werden, dass die Lenkradverriegelung nicht bei gestecktem Zündschlüssel ausgelöst werden kann. Eine Logikschaltung kann dies ebenso sicherstellen (Redundanz), indem ein Schließen der Lenkanschläge 46, 48 in Verbindung mit gestecktem Zündschlüssel ausgeschlossen wird. Dadurch wird verhindert, dass Umdrehungszahlen, die außerhalb der im Fahrbetrieb zulässigen, nicht durch den Antriebsmotors 16 angefahren werden. Es findet somit eine permanente Plausibilitätsbetrachtung der Soll- und Ist-Positionen der Lenkanschläge 46, 48 und eine Abfrage der Zündschlüsselposition statt.

### Bezugszeichenliste

- 2: Lenkradseitiger Teil der Lenkung
- 4: Lenkrad
- 6: Begrenzungsvorrichtung
- 8: Lenkwelle
- 10: Rückmeldevorrichtung
- 12: Steuergerät
- 14: Drehsensor
- 16: Antriebsmotor
- 18: Leistungsbaustein
- 20: Gehäuseteil
- 22: Gehäuseteil
- 24: Rohrförmiger Ansatz
- 26: Rohrförmiger Ansatz
- 28: radiale Ansätze
- 30: radiale Ansätze
- 32: Kugellager
- 34: Kugellager
- 38: Ritzel
- 40: Gewindebuchse
- 42: Außengewinde
- 44: Gewindestück
- 46: Lenkanschlag
- 48: Lenkanschlag
- 50: Gehäusefeste Führungen
- 52: Gewindehülse
- 54: Außenverzahnung
- 56: Gleitring
- 58: Gleitring

## Patentansprüche

1. Begrenzungseinrichtung (6) für die Lenkwinkeleingabe in einer elektrischen Lenkung umfassend:
ein an einer Lenkwelle (8) angeordnetes Getriebe, das eine an der Lenkwelle (8) angeordnete Gewindebuchse (40) mit einem Außengewinde (42) aufweist, das in ein Gewinde an einem Gewindestück (44) eingreift und dem Gewindestück (44) einen Verstellweg ermöglicht, der der maximal zulässigen Anzahl von Umdrehungen des Lenkrades (4) entspricht, und Lenkanschläge (46, 48) zur Begrenzung des Verstellweges des Gewindestücks (44), wobei eine Antriebseinrichtung für die Lenkanschläge (46, 48) vorgesehen ist, durch die die Lenkanschläge (46, 48) gleichmäßig aufeinander zu oder auseinander zu bewegen sind, **dadurch gekennzeichnet, dass** das Getriebe eine über einem Motor (16) motorgetriebene Getriebehülse (52) mit einem Rechts- und einem Linksgewinde aufweist, die in an den Lenkanschlägen (46, 48) angeordnete entsprechende Rechts- oder Linksgewinde eingreifen, wobei die Getriebehülse (52) über Gleitringe (56, 58) in Gehäusehälften (28, 30) der Begrenzungseinrichtung (6) gelagert ist.

2. Begrenzungseinrichtung (6) nach Anspruch 1, **gekennzeichnet durch** gehäusefeste Führungen (50) zur drehfesten linearen Führung des Gewindestücks (44) und der Lenkanschläge (46, 48).

3. Begrenzungseinrichtung (6) nach Anspruch 1, **dadurch gekennzeichnet, dass** das Gewindestück (44) von einem Stellmotor (16) über ein Ritzel (38) angetrieben ist, das in ein Außengewinde (42) des Gewindestücks (44) eingreift.

4. Begrenzungseinrichtung (6) nach Anspruch 1, **dadurch gekennzeichnet, dass** die Gehäusehälften (28, 30) der Begrenzungseinrichtung (6) an der Lenkwelle (8) über Kugellager (32, 34) gelagert sind.

## Claims

1. Limitation device (6) for the steering input in an electric steering system which comprises:
a gear box arranged on a steering shaft (8) which gear box has a threaded bush (40) with a male thread (42) arranged on the steering shaft (8), which male thread engages in the threads of a threaded fitting (44) and the threaded fitting (44) allows for an adjustment track which corresponds with the maximum amount of rotations of the steering wheel (4) that are allowed, and steering stops (46, 48) limit the adjustment track of the threaded fitting (44), wherein a drive system for the steering stops (46, 48) is provided by means of which the steering stops (46, 48) are evenly moved toward each other or away from each other, **characterised in that** the gear box comprises a gear case (52) driven by a motor (16) with a right-hand thread and a left-hand thread which engage in a corresponding right-hand or left-hand threads arranged on the steering stops (46, 48), wherein the gear case (52) is mounted in the body halves (28; 30) of the limitation device (6) by means of bearing rings (56, 58).

2. Limitation device (6) according to claim 1, **characterised by** guides (50) secured to the body for providing the torque-proof linear guiding of the threaded fitting (44) and the steering stops (46, 48).

3. Limitation device (6) according to claim 1, **characterised in that** the threaded fitting (44) is driven by a servomotor (16) by means of a pinion (38) which engages in a male thread (42) of the threaded fitting (44).

4. Limitation device (6) according to claim 1, **characterised in that** the body halves (28, 30) of the limitation device (6) on the steering shaft (8) are mounted by means of ball bearings (32, 34).

## Revendications

1. Dispositif de limitation (6) pour entrer un angle de direction dans une direction électrique, comprenant : une transmission disposée au niveau d'un arbre de direction (8), laquelle présente une douille filetée (40) disposée au niveau de l'arbre de direction (8), munie d'un filetage extérieur (42), qui vient en prise avec un filetage au niveau d'une pièce filetée (44) et qui offre à la pièce filetée (44) une course de réglage, qui correspond au nombre maximal autorisé de tours du volant de direction (4) ; et des butées de direction (46, 48) servant à limiter la course de réglage de la pièce filetée (44), un dispositif d'entraînement étant prévu pour les butées de direction (46, 48), par lequel les butées de direction (46, 48) doivent être déplacées de manière homogène l'une vers l'autre ou l'une à l'opposé de l'autre, **caractérisé en ce que** la transmission présente un manchon de transmission (52) entraîné par l'intermédiaire d'un moteur (16) et muni d'un filetage à droite et d'un filetage à gauche, qui viennent en prise avec des filetages à droite ou à gauche correspondants disposés au niveau des butées de direction (46, 48), le manchon de transmission (52) étant logé par l'intermédiaire d'anneaux de glissement (56, 58) dans des demi-carters (28, 30) du dispositif de limitation (6).

2. Dispositif de limitation (6) selon la revendication 1, **caractérisé par** des guides (50) solidaires du carter servant à guider de manière solidaire en rotation et de manière linéaire la pièce filetée (44) et les butées de direction (46, 48).

3. Dispositif de limitation (6) selon la revendication 1, **caractérisé en ce que** la pièce filetée (44) est entraînée par un servomoteur (16) par l'intermédiaire d'un pignon (38), qui vient en prise avec un filetage extérieur (42) de la pièce filetée (44).

4. Dispositif de limitation (6) selon la revendication 1, **caractérisé en ce que** les demi-carters (28, 30) du dispositif de limitation (6) sont logés au niveau de l'arbre de direction (8) par l'intermédiaire de roulements à billes (32, 34).
